# EUROPÄISCHE PATENTSCHRIFT

(11) **EP 2 905 076 B1**
(45) Veröffentlichungstag und Bekanntmachung des Hinweises auf die Patenterteilung: **29.08.2018**
(21) Anmeldenummer: 14154173.0
(22) Anmeldetag: 06.02.2014
(51) Int. Cl.: B01J 37/08, B01J 23/38, B01D 53/94

(54) **VERFAHREN ZUR HERSTELLUNG EINES KATALYSATORS MIT HOCHGETEMPERTER PD-SCHICHT**
PROCESS FOR PREPARING A CATALYST WITH HIGH TEMPERED PD LAYER
PROCÉDÉ DE PRÉPARATION D'UN CATALYSEUR DOTÉ D'UNE COUCHE PD RECUITE À HAUTE TEMPÉRATURE

(43) Veröffentlichungstag der Anmeldung: 12.08.2015
(73) Patentinhaber: Heraeus Deutschland GmbH & Co. KG, 63450 Hanau (DE)
(72) Erfinder: Wille, Ansgar, 63454 Hanau-Mittelbuchen (DE); Bonifer, Marcus, 63075 Offenbach (DE); Breuer, Christian, 64285 Darmstadt (DE)
(74) Vertreter: Heraeus IP

(56) Entgegenhaltungen:
- EP-A1- 2 163 303
- WO-A2-2011/109676
- DE-T2- 60 216 280
- DE-T5-112005 001 392

## Beschreibung

Die vorliegende Erfindung betrifft ein Verfahren zur Herstellung eines Mehrschichtkatalysators.

Schon seit langer Zeit wird insbesondere bei Kraftfahrzeugen das Abgas des Verbrennungsmotors mit Hilfe eines Katalysators nachbehandelt. Dabei besteht die Aufgabe des Katalysators darin, die bei der Verbrennung entstehenden Schadstoffe Kohlenwasserstoffe (CₘHₙ), Kohlenstoffmonoxid (CO) und Stickoxide (NOₓ) in die ungiftigen Stoffe Kohlenstoffdioxid (CO₂), Wasser (H₂O) und Stickstoff (N₂) umzuwandeln. Dabei finden die folgenden Oxidations- und Reduktionsreaktionen statt:

2CO + O₂ → 2CO₂

2C₂H₆ + 7O₂ → 4CO₂ + 6H₂O

2NO + 2CO → N₂ + 2CO₂

Man unterscheidet verschiedene Arten von Katalysatoren. Neben dem 3-Wege-Katalysator sind am bekanntesten Oxidationskatalysatoren und NOₓ-Speicherkatalysatoren.

Der 3-Wege-Katalysator, auch geregelter Katalysator oder G-Kat genannt, gehört heute zur Standardausrüstung eines Otto-Pkws. Dabei bezieht sich das "geregelt" auf das Motormanagement mit seiner Verbrennung. Der Drei-Wege-Katalysator kann nur bei Fahrzeugen mit Ottomotor und Lambdaregelung eingesetzt werden. Bei einem Drei-Wege-Katalysator finden die Oxidation von CO und HₘCₙ sowie die Reduktion von NOₓ parallel zueinander statt. Voraussetzung dafür ist ein konstantes Luft-Kraftstoff-Gemisch im stöchiometrischen Verhältnis von Lambda gleich 1.

Im Otto-Motor stellt die Lambdasonde die geregelte Verbrennung des Treibstoffs sicher. Mit Hilfe der Lambdasonde wird im Abgas eines Verbrennungsmotors das Verhältnis von Luft zu Kraftstoff bestimmt. Die Messung basiert auf dem Restsauerstoffgehalt im Abgas. Sie ist der Hauptsensor im Regelkreis der Lambdaregelung zur katalytischen Abgasnachbehandlung mit einem geregelten Katalysator und liefert den Messwert an das Motorsteuergerät.

Die Lambdaregelung stellt im Abgas eines Verbrennungsmotors einen gewünschten Lambdawert ein. Als Lambda (λ) bezeichnet man dabei das Verbrennungsluftverhältnis. Dieses setzt die tatsächlich für eine Verbrennung zur Verfügung stehende Luftmasse ins Verhältnis zur mindestens notwendigen stöchiometrischen Luftmasse, die für eine vollständige Verbrennung des Kraftstoffs benötigt wird. Beim stöchiometrischen Kraftstoffverhältnis ist genau die Luftmenge vorhanden um den Kraftstoff vollständig zu verbrennen. Dies wird als λ=1 bezeichnet. Ist mehr Kraftstoff vorhanden spricht man von fettem Gemisch (λ<1), bei Luftüberschuss von magerem Gemisch (λ>1). Bei einer Abweichung vom stöchiometrischen Luft-Kraftstoff-Verhältnis in den Luftüberschuss, den mageren Bereich, werden nicht alle Stickoxide abgebaut, da die benötigten Reduktionsmittel schon vorher oxidiert werden. Im Luftunterschuss, im fetten Bereich, werden nicht alle Kohlenwasserstoffe und nicht das gesamte Kohlenstoffmonoxid abgebaut.

Das Verbrennungsluftverhältnis Lambda λ, auch Luftüberschuss, Luftüberschusszahl oder kurz Luftzahl genannt, ist eine Kennzahl aus der Verbrennungslehre. Aus der Zahl lassen sich Rückschlüsse auf den Verbrennungsverlauf, Temperaturen, Schadstoffentstehung und den Wirkungsgrad ziehen. Die richtige Abstimmung von Vergaser- oder Einspritzanlage und somit die Einstellung von Lambda λ hat einen großen Einfluss auf Motorleistung, Spritverbrauch und Schadstoffausstoß.

Die Lambdaregelung findet bei Otto-Motoren üblicherweise zwischen engen Grenzen von ca. 0,97<λ<1,03 statt. Den Bereich innerhalb dieser Grenzen bezeichnet man als Lambdafenster. Innerhalb dieses Bereiches wird die beste Reduzierung aller drei Schadstoffarten erzielt. Bei hoher Motorleistung wird durch einen fetten Motorbetrieb und dadurch kälterem Abgas einer Überhitzung und Zerstörung von Abgasbauteilen wie z. B. Krümmer, Turbolader, Katalysator vorgebeugt.

Damit im Betrieb ein Wert von λ = 1 erhalten werden kann, muss im Katalysator ausreichend Sauerstoff zur Verfügung stehen, um die oben gezeigten Oxidationsreduktionen ausführen zu können. Auf der anderen Seite muss bei der Reduktion freiwerdender Sauerstoff gebunden werden, damit die Reduktion der Stickoxide zu Stickstoff stattfindet. 3-Wege-Katalysatoren enthalten meist einen Sauerstoffspeicher, der unter oxidativen Bedingungen mit Sauerstoff aufgeladen wird und unter reduzierenden Bedingungen wieder Sauerstoff abgeben kann.

Neben dem Sauerstoffspeicher umfasst ein Katalysator häufig auch wenigstens ein Edelmetall; meist handelt es sich hierbei um Platin, Palladium und/oder Rhodium. Wird in einem Katalysator weiterhin Aluminiumoxid verwendet, so ist darauf zu achten, dass das Rhodium nicht auf das Aluminiumoxid aufgetragen wird. Bei höheren Temperaturen lagert sich das Rhodium in die poröse Struktur des Aluminiumoxids und steht damit für die eigentliche Katalyse-Reaktion nicht mehr zur Verfügung. So beschreibt beispielsweise EP 1053779 A1 einen Katalysator, in welchem die katalytisch aktive Schicht ein Cer-Komplexoxid und ein Zirkonium-Komplex-Oxid umfasst. Während sich auf dem Cer-Komplexoxid Palladium befindet, sind auf dem Zirkonium-Komplex-Oxid Platin und Rhodium aufgetragen.

DE 10024 994 A1 beschreibt einen Katalysator, bei welchem die Edelmetalle in getrennten Schichten auf einen Träger aufgebracht werden. Der Katalysator umfasst eine erste Überzugsschicht, gebildet auf einer hitzebeständigen Unterlage, und eine zweite Überzugsschicht, gebildet auf der ersten Überzugsschicht. Die erste Überzugsschicht beinhaltet Aluminiumoxid, welches Palladium trägt; die zweite Überzugsschicht beinhaltet Cer-Zirkonium-Komplexoxide, die sowohl Platin als auch Rhodium tragen.

Bei der Herstellung der Katalysatoren wird üblicherweise zuerst eine erste Schicht, welche Palladium enthält, auf den Träger aufgebracht. Diese Schicht wird dann bei einer Temperatur von etwa 550 °C getempert. Anschließend wird eine zweite Schicht, welche Platin und/oder Rhodium enthält, aufgebracht und bei einer Temperatur von etwa 450 °C getempert. Ein entsprechendes Verfahren ist beispielsweise in US 2009/257933 A1, US 2008/044330 A1 oder WO 02/083301 A2 beschrieben. Eine Temperatur von 600 °C zum Tempern der ersten und der zweiten Schicht ist in US 2005/0255993 A1 beschrieben.

Durch das Tempern der Schichten wird das in Form eines Salzes enthaltene Edelmetall reduziert. Hierdurch erhält man annähernd sphärische Partikel des jeweiligen Edelmetalls. Die Edelmetallteilchen oder Partikel stellen die aktiven Zentren des Katalysators da. An ihnen findet die eigentliche Oxidations- beziehungsweise Reduktionsreaktion statt. Das Herstellungsverfahren beeinflusst somit die spätere katalytische Aktivität des erhaltenen Katalysators. Die katalytische Aktivität soll naturgemäß möglichst hoch sein, so dass der Ausstoß an Schadstoffen im Abgas, wie Stickoxiden NOₓ, Kohlenmonoxid CO und Kohlenwasserstoffen HC, möglichst gering ist.

DE 11 2005 001392 T5 offenbart einen schichtförmigen Abgasbehandlungskatalysator, umfassend: (a) einen Träger wie Cordierit; (b) eine erste Schicht, abgeschieden auf dem Träger, umfassend eine Palladiummetallkomponente, eine Platinmetallkomponente und eine Sauerstoffspeicherkomponente wie Ceroxid, auf einem hitzebeständigen Metalloxidträger, wie γ-Aluminiumoxid; und (c) eine zweite Schicht, abgeschieden auf der ersten Schicht, umfassend eine Rhodiummetallkomponente, eine Platinmetallkomponente und eine Sauerstoffspeicherkomponente, wie Ceroxid, auf einem hitzebeständigen Metalloxidträger, wie γ-Aluminiumoxid.

DE 602 16 280 T2 offenbart einen Abgasreinigungskatalysator umfassend Rhodium und Platin auf einem Aluminiumoxidträger, Rhodium und Platin auf einem Zirkoniumkomplexoxidträger und Platin auf einem Cer-Komplexoxidträger.

EP 2 163 303 A1 offenbart einen Abgasreinigungskatalysator (1) umfassend ein Substrat (2), eine untere Schicht (3), die das Substrat (2) bedeckt und ein Sauerstoffspeichermaterial und Palladium enthält, wobei die untere Schicht frei von Rhodium ist, und eine obere Schicht (4), die die untere Schicht (3) bedeckt und Rhodium auf einem Träger enthält, wobei die obere Schicht eine geringere Sauerstoffspeicherkapazität als die untere Schicht (3) aufweist.

WO 2011/109676 A2 offenbart einen Katalysatorartikel, der eine auf einem Substrat gebildete erste katalytische Schicht und eine auf der ersten katalytischen Schicht gebildete zweite katalytische Schicht umfasst, wobei die erste katalytische Schicht eine mit Palladium imprägnierte Ceroxid-freie Sauerstoffspeicherkomponente und ein mit Platin imprägniertes hochschmelzendes Metalloxid und die zweite katalytische Schicht eine mit Platin und Rhodium imprägnierte Ceroxid enthaltende Sauerstoffspeicherkomponente umfasst.

Es ist die Aufgabe der vorliegenden Erfindung ein Verfahren zur Herstellung eines Katalysators bereitzustellen, welcher eine verbesserte katalytische Aktivität gegenüber bekannten Katalysatoren aufweist. Insbesondere soll ein solcher Katalysator einen verminderten Ausstoß an CO, HC und NOₓ sowohl bei fettem als auch bei magerem Betrieb eines Verbrennungsmotors ermöglichen.

Überraschenderweise hat sich gezeigt, dass ein Katalysator, bei dem die erste Schicht zuerst bei einer geringeren Temperatur und anschließend bei einer höheren Temperatur getempert wird, einen geringeren Ausstoß an NOₓ, CO und HC gegenüber konventionellen Katalysatoren ermöglicht und zwar sowohl bei mageren als auch bei fetten Motorbedingungen. Die vorliegende Erfindung betrifft daher ein Verfahren zur Herstellung eines Mehrschichtkatalysators (4) zur Abgasnachbehandlung von Verbrennungsabgasen umfassend die folgenden Schritte:
a) Bereitstellen eines Trägers, dessen Oberfläche mit den zu reinigenden Gasen in Kontakt tritt,
b) Aufbringen einer ersten katalytisch wirksamen Zusammensetzung, welche Palladium in Form eines Salzes aufweist, auf die Oberfläche des Trägers, zur Herstellung einer ersten Schicht (A),
c) Tempern der ersten Schicht (A) bei einer ersten Temperatur T₁ in einem Bereich von 400 bis 700 °C, vorzugsweise von 500 bis 650 °C für eine Dauer t₁ von 5 Minuten oder mehr,
d) anschließendes Tempern der ersten Schicht (A) bei einer zweiten Temperatur T₂ in einem Bereich von 700 bis 1200 °C, vorzugsweise von 750 bis 950 °C, wobei T₂ um einen Betrag von 100 bis 400 °C größer ist als T₁,
e) Aufbringen einer zweiten katalytisch wirksamen Zusammensetzung, welche Platin und/oder Rhodium jeweils in Form eines Salzes aufweist, zur Herstellung einer zweiten Schicht (B), wobei die zweite Schicht (B) die getemperte erste Schicht (A) vollständig oder teilweise bedeckt, und
f) Tempern der zweiten Schicht (B) bei einer dritten Temperatur T₃ in einem Bereich von 400 bis 700 °C, vorzugsweise von 500 bis 650 °C.

Der Träger, auf welchen die erste katalytisch wirksame Schicht aufgebracht wurde, wird zunächst bei einer ersten Temperatur T₁ getempert. Tempern im Sinne der vorliegenden Erfindung bedeutet ein Schritt des Kalzinierens. Die Begriffe Tempern und Kalzinieren werden im Folgenden synonym verwendet. Beim im Stand der Technik bekannten Erwärmen wird aus der katalytisch wirksamen Schicht eventuell vorhandene Flüssigkeit entfernt. Es findet jedoch keine chemische oder strukturelle Änderung der Zusammensetzung statt, wie dies beim Tempern beziehungsweise Kalzinieren der Fall ist.

Im Gegensatz hierzu wird beim Tempern bei der Temperatur T₁ und auch beim Tempern bei der Temperatur T₃ das in der ersten und der zweiten Zusammensetzung jeweils enthaltene Edelmetallsalz beziehungsweise die enthaltenen Edelmetallsalze reduziert, wodurch es zur Ausbildung von Edelmetallzentren (Edelmetallpartikel, Edelmetallteilchen) in den jeweiligen Schichten kommt. Das zweite Tempern bei einer gegenüber der ersten Temperatur T₁ erhöhten Temperatur T₂ führt zu einer Alterung der ersten Schicht. Überraschenderweise hat sich gezeigt, dass durch das Tempern bei der Temperatur T₂ die Zusammensetzung derart beeinflusst wird, dass die dann enthaltenen Palladiumteilchen besonders für die Reaktion mit Stickoxiden NOₓ geeignet sind. Vorzugsweise liegen die Edelmetalle als Nitratsalze vor. Diese sind kostengünstig zu erhalten und einfach gut im erfindungsgemäßen Verfahren zu verarbeiten.

Die Dauer des Temperns bei der Temperatur muss so lange sein, dass die Zusammensetzung der ersten Schicht vollständig auf die benötigte Temperatur T₁ gebracht wird. Die Dauer t₁ beträgt daher 5 Minuten oder mehr, vorzugsweise 10 Minuten oder mehr. Bei einer Kalzinierung in einem Bandkalzinierer ist es möglich, einen Träger, auf welchen die erste katalytisch wirksame Zusammensetzung aufgebracht wurde, in einem solchen Zeitraum vollständig auf die Temperatur T₁ zu erwärmen. Um sicherzustellen, dass alle Bereiche des Trägers und der ersten Zusammensetzung die Temperatur T₁ aufweisen, erfolgt die Kalzinierung vorzugsweise für 10 Minuten oder mehr. Insbesondere dauert die Kalzinierung bei der Temperatur T₁ 30 Minuten oder mehr. Wird der Träger, auf den die erste katalytisch wirksame Zusammensetzung aufgebracht ist, beispielsweise in einem Muffelofen getempert, so ist ein längerer Zeitraum von etwa 4 Stunden nötig, um sicher zu stellen, dass eine ausreichende Temperierung stattfindet. Die Dauer t₁ ist abhängig von der Art des Ofens. Sie beträgt jedoch wenigstens 5 Minuten, um eine vollständige Temperierung sicher zu stellen. Die Dauer t₁ beträgt vorzugsweise 5 bis 300 Minuten. Tempern über eine Dauer von mehr als 300 Minuten führt zu keinerlei Änderung in der Zusammensetzung des Mehrschichtkatalysators. Eine längere Dauer würde daher lediglich Kosten verursachen, ohne jedoch einen technischen Vorteil zu bringen und wäre daher unwirtschaftlich.

Ein Mehrschichtkatalysator (4), der gemäß dem erfindungsgemäßen Verfahren hergestellt ist, ist geeignet, zur Abgasnachbehandlung von Verbrennungsmotoren verwendet zu werden. Abgase von Verbrennungsmotoren enthalten Kohlenwasserstoffe und Kohlenstoffmonoxid, welche in der Nachbehandlung oxidiert werden. Stickoxide aus dem Abgas werden reduziert. Damit der Sauerstoff aus den Stickoxiden entfernt werden kann und gleichzeitig Kohlenwasserstoffe und Kohlenstoffmonoxid oxidiert werden können, umfasst die erste katalytisch wirksame Zusammensetzung der ersten Schicht (A) vorzugsweise weiterhin ein erstes Sauerstoffspeichermaterial. Dieses Sauerstoffspeichermaterial weist ein oder mehrere Metalle ausgewählt aus der Gruppe der seltenen Erden auf.

Als besonders wirksames Sauerstoffspeichermaterial haben sich Cer-Zirkonium-Oxide herausgestellt. Bei Cer-Zirkonium-Oxiden kann es sich um Mischoxide oder um Mischungen von Cer-oxid CeO₂ und Zirkoniumoxid ZrO₂ handeln.

Vorzugsweise weist das Sauerstoffspeichermaterial der ersten katalytisch wirksamen Zusammensetzung daher CeₓCr_{y}O_{z} mit z = 2 auf, wobei bevorzugt x > 0,5 und y < 0,5 und x + y = 1 ist. Solche Cer-reichen Cer-Zirkonium-Oxide haben sich in der ersten Schicht (A) eines Mehrschichtkatalysators als besonders effektive Sauerstoffspeichermaterialien erwiesen. Insbesondere in Verbindung mit Palladium ergibt sich eine gute Sauerstoffspeicherkapazität des Sauerstoffspeichermaterials der ersten Schicht (A).

Das erste Sauerstoffspeichermaterial weist daher Cer vorzugsweise in einer Menge von 50 Gew.-% bis 85 Gew.-%, besonders bevorzugt von 60 Gew.-% bis 80 Gew.-% auf, jeweils bezogen auf das Gesamtgewicht des ersten Sauerstoffspeichermaterials der ersten katalytisch wirksamen Zusammensetzung der ersten Schicht (A). Entsprechend weist das erste Sauerstoffspeichermaterial vorzugsweise Zirkonium in einer Menge von 10 Gew.-% bis 35 Gew.-%, besonders bevorzugt von 15 Gew.-% bis 30 Gew.-% auf, jeweils bezogen auf das Gesamtgewicht des ersten Sauerstoffspeichermaterials der ersten Schicht (A). Die Zugabe von ZrO₂ zu CeO₂ führt zu einer verbesserten thermischen Stabilität und somit zu einer höheren Aktivität und längeren Lebensdauer des Mehrschichtkatalysators (4), wie weiter unten zur zweiten Schicht (B) erläutert.

Bevorzugt umfasst die katalytisch wirksame Zusammensetzung der ersten Schicht (A) das Sauerstoffspeichermaterial in einem Anteil von 40 Gew.-% bis 90 Gew.-%, besonders bevorzugt in einem Anteil von 70 Gew.-% bezogen auf eine Gesamtzusammensetzung von 100 Gew.-% der ersten Schicht (A).

Die erste Schicht (A) weist in einer bevorzugten Ausführungsform Palladium in einem Anteil von 0,05 Gew.-% bis 10 Gew.-%, insbesondere bevorzugt von 0,1 Gew.-% bis 10 Gew.-%, ganz besonders vorzugsweise von 0,5 Gew.-% bis 5 Gew.-% auf, bezogen auf eine Gesamtzusammensetzung von 100 Gew.-% der ersten Schicht (A). Die Verwendung von Palladium zusammen mit einem Sauerstoffspeichermaterial sorgt für einen langsameren Ein- und Ausbau von Sauerstoff in diesem Material. Durch den Einsatz von Palladium wird jedoch die Sauerstoffspeicherkapazität des Sauerstoffspeichers erhöht.

Die zweite katalytisch wirksame Zusammensetzung der zweiten Schicht (B) umfasst vorzugsweise ein zweites Sauerstoffspeichermaterial. Dabei können das erste Sauerstoffspeichermaterial der ersten katalytisch wirksamen Zusammensetzung der ersten Schicht (A) und das zweite Sauerstoffspeichermaterial der zweiten katalytisch wirksamen Zusammensetzung der zweiten Schicht (B) gleich oder voneinander verschieden sein.

Die katalytisch wirksame Zusammensetzung der zweiten Schicht (B) umfasst vorzugsweise ein Sauerstoffspeichermaterial, welches ein oder mehrere Metalle, ausgewählt aus der Gruppe der seltenen Erden, aufweist. Bevorzugt handelt es sich um die Oxide der seltenen Erdmetalle, welche die Zusammensetzung der zweiten Schicht (B) insbesondere in einem Anteil im Bereich von 70 Gew.-% bis 90 Gew.-%, bevorzugt von 90 Gew.-% bezogen auf eine Gesamtzusammensetzung von 100 Gew.-% der zweiten Schicht (B) umfasst. Der Anteil an seltenen Erdmetallen als Oxid bezieht sich auf den gesamten Stoffinhalt der zweiten Schicht (B).

Das Sauerstoffspeichermaterial der Zusammensetzung der zweiten Schicht (B) umfasst vorzugsweise ein Cer-Zirkonium-Oxid (CeₓZr_{y}O_{z}). Dabei handelt es sich bevorzugt um ein Cerreiches Cer-Zirkonium-Oxid, bei welchem der Anteil an Cer-Oxid CeO₂ bezogen auf das gesamte Oxid 50 Gew.-% oder mehr beträgt und der Anteil an Zirkonium-Oxid ZrO₂ geringer ist als der Anteil an Cer-Oxid CeO₂. Das Sauerstoffspeichermaterial der zweiten Schicht (B) weist somit insbesondere die Zusammensetzung CeₓCr_{y}O_{z} mit z = 2 auf, wobei bevorzugt x > 0,5 und y < 0,5 und x + y = 1 ist. Cer-Zirkonium-Oxide sind als Sauerstoffspeichermaterial in Mehrschichtkatalysatoren im Stand der Technik bekannt. Es hat sich nun gezeigt, dass insbesondere Cer reiche Sauerstoffspeichermaterialien besonders geeignet sind.
Das zweite Sauerstoffspeichermaterial der zweiten katalytisch wirksamen Zusammensetzung kann einen Anteil im Bereich von 50 Gew.-% bis 80 Gew.-% CeO₂, insbesondere von 60 Gew.-% CeO₂ umfassen, bezogen auf eine Gesamtzusammensetzung von 100 Gew.-% der zweiten Schicht (B). Es weist daher vorzugsweise Zirkoniumoxid in einer Menge von 10 Gew.-% bis 50 Gew.-%, besonders vorzugsweise von 20 Gew.-% bis 40 Gew.-% ganz besonders vorzugsweise 30 Gew.-% auf, bezogen auf das Gesamtgewicht des zweiten Sauerstoffspeichermaterials der zweiten katalytisch wirksamen Zusammensetzung von 100 Gew.-%.

Für die Umsatzrate, die durch den Mehrschichtkatalysator (4) erreicht wird, ist die thermische Stabilität des Sauerstoffspeichermaterials relevant. Bei dem ersten und zweiten Sauerstoffspeichermaterial handelt es sich um poröse Materialien. Die katalytisch aktiven Edelmetallzentren befinden sich sowohl auf der äußeren Oberfläche des Sauerstoffspeichermaterials als auch in den Poren. Im Betrieb strömt nun das Abgas auf das Sauerstoffspeichermaterial der katalytisch wirksamen Schicht (1, 2). Durch die poröse Oberfläche kommt es zu Turbulenzen in den Strömungen, was zu einem verbesserten Kontakt zwischen katalytisch wirksamer Schicht und den zu behandelnden Abgasen führt.

Ist die Porengröße des Sauerstoffspeichermaterials jedoch zu klein, strömt das Abgas ausschließlich entlang der Oberflächen des Sauerstoffspeichermaterials. Das katalytisch wirksame Edelmetall befindet sich jedoch nicht nur auf der Oberfläche sondern auch im Inneren des Sauerstoffspeichermaterials in dessen Poren. Dieses im Inneren befindliche Edelmetall steht bei zu kleiner Porengröße im Betrieb für die Behandlung des Abgases nicht zur Verfügung. Dabei sind vor allem das Porenvolumen und der Porenradius sowie die Größe der Öffnung der Poren entscheidend. Diese müssen sowohl bei der Herstellung als auch in Betrieb wenigstens teilweise erhalten bleiben. Das Porenvolumen liegt üblicherweise im Bereich von 0,2 bis 10,0 ml/g, insbesondere im Bereich von 0,3 bis 0,8 ml/g. Die durchschnittlichen Porenradien betragen etwa 5 bis 20 nm, insbesondere 7 bis 12 nm.

Im bevorzugten Cer-Zirkonium-Oxid wird die Struktur des reinen Cer-Oxids durch das Zirkonium-Oxid aufgebrochen. Dies führt zu einer Änderung des Porenvolumens und des Porenradius des Sauerstoffspeichermaterials. Insbesondere wird die thermische Stabilität der Struktur erhöht. Auch im Betrieb bei Temperaturen von über 500 °C bleiben die Poren des Cer-Zirkonium-Oxides stabil. Im Betrieb steht daher die vollständige Menge an vorhandenem Edelmetall der Reaktion mit dem Abgas zur Verfügung. Es hat sich gezeigt, dass ein Anteil von wenigstens 10 Gew.-% Zirkonium-Oxid im Sauerstoffspeichermaterial für eine ausreichende, thermische Stabilität sorgt. Ein zu großer Anteil an Zirkonium-Oxid von über 45 Gew.-% führt dagegen zu einer Verringerung der Sauerstoffspeicherkapazität des Sauerstoffspeichermaterials.

Die zweite katalytisch wirksame Zusammensetzung weist Platin und/oder Rhodium auf. Vorzugsweise weist sie diese Edelmetalle in einem Anteil von 0,005 Gew.-% bis 2,0 Gew.-%, insbesondere bevorzugt von 0,01 Gew.-% bis 1,0 Gew.-%, ganz besonders bevorzugt 0,02 Gew.-% bis 0,8 Gew.-% auf, bezogen auf 100 Gew.-% der Gesamtzusammensetzung der zweiten Schicht (B). Ein solcher Gewichtsanteil ist notwendig, um eine ausreichende katalytische Aktivität zu ermöglichen. Die Verwendung von Platin und/oder Rhodium in der Zusammensetzung ermöglicht den schnellen Ein- und Ausbau von Sauerstoff im Sauerstoffspeichermaterial. Kommt das zu behandelnde Abgas mit der Zusammensetzung in Kontakt, so können Stickoxide rasch reduziert werden, in dem der Sauerstoff aus dem Reaktionsgleichgewicht entfernt und im Sauerstoffspeicher gespeichert wird. Geringere Mengen an Platin und/oder Rhodium ermöglichen keine ausreichende Umsetzung von Stickoxiden durch den Katalysator.

Dabei beträgt das Massenverhältnis von Platin zu Rhodium insbesondere 9:1 bis 1:9, vorzugsweise 7:1 bis 1:5, besonders bevorzugt 5:1 bis 1:3. Es hat sich gezeigt, dass in diesem Verhältnis der Stickoxidumsatz besonders effektiv ist.

Um die Abgasbehandlung zu verbessern, umfasst die Zusammensetzung der zweiten Schicht (B) vorzugsweise Platin und/oder Rhodium. Die Zusammensetzung der ersten Schicht (A) kann Palladium umfassen. Es hat sich gezeigt, dass die Wirkung der Edelmetalle bei der Umsetzung der Abgase besonders hoch ist, wenn diese in getrennten Schichten vorliegen. Insbesondere Palladium sollte von Platin und Rhodium getrennt vorliegen. Im Betrieb erwärmt sich der Katalysator. Hierdurch kann es zur Ausbildung von Aggregaten der Edelmetalle kommen. Insbesondere Palladium neigt zur Ausbildung von Aggregaten. Liegt Palladium gemeinsam mit Platin und/oder Rhodium in einer Schicht vor, so kommt es zur Ausbildung von Mischaggregaten, welche eine gegenüber den reinen Edelmetallen deutlich verringerte katalytische Aktivität aufweisen.

Die erste Schicht (A) weist in einer bevorzugten Ausführungsform auf Grund von Palladium in der katalytisch wirksamen Zusammensetzung eine größere Sauerstoffspeicherkapazität auf als die zweite Schicht (B), welche eine Zusammensetzung, enthaltend Platin und/oder Rhodium, aufweist. Bezogen auf eine Sauerstoffspeicherkapazität der ersten Schicht (A) von 100%, beträgt die Sauerstoffspeicherkapazität der zweiten Schicht bevorzugt 50% bis 80%, besonders bevorzugt 70%. Dies entspricht einer 1,25 bis 2-fach, insbesondere 1,4-fach erhöhten Sauerstoffspeicherkapazität der ersten Schicht (A) gegenüber der zweiten Schicht (B).

Überraschenderweise hat sich nun gezeigt, dass durch ein mehrfaches Tempern der ersten Schicht (A) bei der erfindungsgemäßen Herstellung eines Katalysators die katalytische Aktivität eines entsprechend hergestellten

Katalysators verbessert wird. Die erste Schicht (A) wird dabei zunächst bei einer ersten Temperatur T₁ und anschließend bei einer zweiten Temperatur T₂ getempert, wobei die Temperatur T₂ größer ist als die Temperatur T₁. Die zweite Temperatur T₂ ist um einen Betrag von 100°C bis 400°C größer als die Temperatur T₁. Das erste Tempern erfolgt bei einer Temperatur T₁ im Bereich von 400°C bis 700°C. Die anschließende Temperierung erfolgt dann bei einer Temperatur T₂ in einem Bereich von 700°C bis 1200°C. Vorzugsweise liegt die Temperatur T₂ in einem Bereich von 750°C bis 950°C. Die Temperatur T₁ liegt vorzugsweise in einem Bereich von 500°C bis 650°C. In diesen Temperaturbereichen ist die katalytische Aktivität des erfindungsgemäß hergestellten Katalysators besonders hoch. Höhere Temperaturen führen nicht zu einer weiteren Verbesserung des Schadstoffabbaus durch den erfindungsgemäß hergestellten Katalysator.

Bei Temperaturen von mehr als 1200 °C kann die Struktur des Trägers zerstört werden, so dass der Katalysator nicht verwendet werden kann oder dessen Lebensdauer verkürzt wird. Der Temperaturbereich für T₂ entspricht im Wesentlichen Temperaturen, welche auch im Betrieb eines Verbrennungsmotores, beispielsweise in einem Kraftfahrzeug oder einem Motorrad entstehen.

In den Tabellen 1 und 2 sind Abgasmessungen von Verbrennungsmotoren dargestellt. Dabei wurden die Abgase sowohl über konventionell hergestellte Katalysatoren geleitet (Nr. 1 bis 8), als auch über erfindungsgemäß hergestellte Katalysatoren (Nr. 9 bis 14). In Tabelle 1 sind die Messungen in fettem Motorbetrieb gezeigt, in Tabelle 2 bei magerem Motorbetrieb. Die oxidischen Trägermaterialien der Katalysatoren ergeben sich aus den nachfolgenden Tabellen 3 und 4.

**Tabelle 1:**

| Kat.-Nr. | Menge an Edelmetall [Gew.-%] | Verhältnis der Edelmetalle [Pt:Pd:Rh] | fetter Motorbetrieb | | | T₁ [°C] | T₂ [°C] | T₃ [°C] |
|---|---|---|---|---|---|---|---|---|
| | | | NOₓ [g/km] | CO [g/km] | HC [g/km] | | | |
| 1 | 1,94 | 2:7:1 | 29 | 98 | 98 | 550 | -- | 550 |
| 2 | 1,94 | 2:7:1 | 33 | 98 | 99 | 550 | -- | 550 |
| 3 | 1,77 | 2:7:1 | 34 | 95 | 99 | 950 | -- | 550 |
| 4 | 1,77 | 2:7:1 | 18 | 94 | 98 | 950 | 950 | 550 |
| 5 | 1,77 | 2:7:1 | 31 | 96 | 99 | 700 | -- | 550 |
| 6 | 1,41 | 2:55:3 | 26 | 95 | 99 | 550 | -- | 550 |
| 7 | 1,41 | 2:55:3 | 30 | 95 | 99 | 750 | -- | 550 |
| 8 | 1,77 | 0:10:1 | 25 | 95 | 98 | 750 | -- | 550 |
| 9* | 1,94 | 2:7:1 | 17 | 94 | 98 | 550 | 950 | 550 |
| 10* | 1,94 | 2:7:1 | 15 | 97 | 97 | 550 | 950 | 550 |
| 11* | 1,77 | 2:7:1 | 18 | 94 | 98 | 700 | 950 | 550 |
| 12* | 1,41 | 2:55:3 | 14 | 92 | 95 | 550 | 950 | 550 |
| 13* | 1,41 | 2:55:3 | 16 | 94 | 98 | 750 | 950 | 550 |
| 14* | 1,77 | 0:10:1 | 15 | 94 | 98 | 750 | 950 | 550 |

| | | | | | | | | |
|---|---|---|---|---|---|---|---|---|
| * erfindungsgemäß hergestellte Katalysatoren | | | | | | | | |

In Tabelle 1 ist in Spalte 2 zudem die Menge an Edelmetall angegeben, die sich insgesamt auf dem Katalysator befindet. Die Angabe in Gew.-% bezieht sich somit auf 100 Gew.-% einer Gesamtzusammensetzung aus erster Schicht (A) und zweiter Schicht (B).

In Spalte 3 der Tabelle 1 ist das Verhältnis der im Katalysator vorhandenen Edelmetalle angegeben. Das angegebene Verhältnis gibt das Masseverhältnis an und entspricht dem Verhältnis Pt:Pd:Rh.

**Tabelle 2:**

| Kat.-Nr. | magerer Motorbetrieb | | | T₁ [°C] | T₂ [°C] | T₃ [°C] |
|---|---|---|---|---|---|---|
| | NOₓ [g/km] | CO [g/km] | HC [g/km] | | | |
| 1 | 73 | 74 | 97 | 550 | -- | 550 |
| 2 | 73 | 73 | 96 | 550 | -- | 550 |
| 3 | 74 | 73 | 98 | 950 | -- | 550 |
| 4 | 48 | 62 | 84 | 950 | 950 | 550 |
| 5 | 75 | 74 | 99 | 700 | -- | 550 |
| 6 | 71 | 74 | 97 | 550 | -- | 550 |
| 7 | 73 | 74 | 98 | 750 | -- | 550 |
| 8 | 72 | 74 | 98 | 750 | -- | 550 |
| 9* | 41 | 58 | 75 | 550 | 950 | 550 |
| 10* | 41 | 58 | 75 | 550 | 950 | 550 |
| 11* | 58 | 67 | 91 | 700 | 950 | 550 |
| 12* | 37 | 54 | 72 | 550 | 950 | 550 |
| 13* | 46 | 63 | 83 | 750 | 950 | 550 |
| 14* | 50 | 66 | 87 | 750 | 950 | 550 |

| | | | | | | |
|---|---|---|---|---|---|---|
| * erfindungsgemäß hergestellte Katalysatoren | | | | | | |

Die Bestimmung der Abgaswerte erfolgte in allen Beispielen gemäß der Euro-3 Norm (Prüfzyklus: Zyklus der Verordnung ECE R40). In der nachfolgenden Tabelle 3 sind die Zusammensetzungen der oxidischen Materialien angegeben, wie sie in den erfindungsgemäß hergestellten Katalysatoren eingesetzt wurden.

**Tabelle 3:**

| Oxidisches Material | CeO₂ [Gew.-%] | ZrO₂ [Gew.-%] | La₂O₃ [Gew.-%] | Pr₆O₁₁ [Gew.-%] | Al₂O₃ [Gew.-%] | La₂O₃ [Gew.-%] | BET [m²/g] |
|---|---|---|---|---|---|---|---|
| OM 1 | 60 | 30 | 3 | 7 | | | 49 |
| OM 2 | | | | | 97,1 | 2,9 | 131 |

In der nachfolgenden Tabelle 4 sind die oxidischen Trägermaterialien der ersten Schicht (A) und der zweiten Schicht (B) der in den Tabellen 1 und 2 gezeigten Katalysatoren angegeben. Sowohl die erste Schicht (A) als auch die zweite Schicht (B) umfassen jeweils ein Sauerstoffspeichermaterial (oxidisches Material Nr. 1) und dotiertes Aluminiumoxid (oxidisches Material Nr. 2). Die Zusammensetzungen werden mit Al₂O₃ zu 100 Gew.-% ergänzt.

**Tabelle 4: Zusammensetzung der oxidischen Materialien der Katalysatoren**

| Kat.-Nr. | Erste Schicht | Zweite Schicht |
|---|---|---|
| 1 | 30 Gew.-% OM 1 | 65 Gew.-% OM 1 |
| | 53 Gew.-% OM 2 | 25 Gew.-% OM 2 |
| 2 | 30 Gew.-% OM 1 | 65 Gew.-% OM 1 |
| | 53 Gew.-% OM 2 | 25 Gew.-% OM 2 |
| 3 | 30 Gew.-% OM 1 | 65 Gew.-% OM 1 |
| | 53 Gew.-% OM 2 | 25 Gew.-% OM 2 |
| 4 | 30 Gew.-% OM 1 | 65 Gew.-% OM 1 |
| | 53 Gew.-% OM 2 | 25 Gew.-% OM 2 |
| 5 | 55 Gew.-% OM 1 | 65 Gew.-% OM 1 |
| | 40 Gew.-% OM 2 | 25 Gew.-% OM 2 |
| 6 | 55 Gew.-% OM 1 | 80 Gew.-% OM 1 |
| | 40 Gew.-% OM 2 | 15 Gew.-% OM 2 |
| 7 | 55 Gew.-% OM 1 | 80 Gew.-% OM 1 |
| | 40 Gew.-% OM 2 | 15 Gew.-% OM 2 |
| 8 | 55 Gew.-% OM 1 | 50 Gew.-% OM 1 |
| | 40 Gew.-% OM 2 | 45 Gew.-% OM 2 |
| 9* | 30 Gew.-% OM 1 | 65 Gew.-% OM 1 |
| | 53 Gew.-% OM 2 | 25 Gew.-% OM 2 |
| 10* | 30 Gew.-% OM 1 | 65 Gew.-% OM 1 |
| | 53 Gew.-% OM 2 | 25 Gew.-% OM 2 |
| 11* | 55 Gew.-% OM 1 | 65 Gew.-% OM 1 |
| | 40 Gew.-% OM 2 | 25 Gew.-% OM 2 |
| 12* | 55 Gew.-% OM 1 | 80 Gew.-% OM 1 |
| | 40 Gew.-% OM 2 | 15 Gew.-% OM 2 |
| 13* | 55 Gew.-% OM 1 | 80 Gew.-% OM 1 |
| | 40 Gew.-% OM 2 | 15 Gew.-% OM 2 |
| 14* | 55 Gew.-% OM 1 | 50 Gew.-% OM 1 |
| | 40 Gew.-% OM 2 | 45 Gew.-% OM 2 |

| | | |
|---|---|---|
| * erfindungsgemäß hergestellte Katalysatoren | | |

Wie aus den Tabellen 1 und 2 hervorgeht, kann der Ausstoß an Schadstoffen aus Verbrennungsmotoren mit einem erfindungsgemäß hergestellten Katalysator gegenüber konventionellen Katalysatoren abgesenkt werden. Dabei sind der Ausstoß von Stickoxiden NOₓ, Kohlenstoffmonoxid CO und Kohlenwasserstoffen HC, insbesondere von NOₓ und HC im mageren Motorbetrieb deutlich geringer beim Einsatz erfindungsgemäß hergestellter Katalysatoren als bei konventionellen Katalysatoren. Auch im fetten Motorbetrieb erfolgt eine Verringerung des Schadstoffausstoßes. Hier konnte insbesondere der Ausstoß an Stickoxiden NOₓ gegenüber konventionellen Katalysatoren verringert werden.

Wie aus den Messungen hervorgeht, ist es wichtig, dass die erste Schicht (A) bei zwei voneinander verschiedenen Temperaturen T₁ und T₂ getempert wird, wobei T₂ größer ist als T₁. Wird die erste Schicht nur einmal bei der Temperatur T₂ getempert (Katalysator 3), so entspricht der Ausstoß an Schadstoffen im Wesentlichen dem von Katalysatoren, die bei einer Temperatur T₁ von 550 °C (Katalysatoren 1 und 2) getempert wurden.

Auch das zweimalige Tempern bei der Temperatur T₂, wie es bei Katalysator 4 erfolgt ist, führt nicht zu einer weiteren Verringerung der Schadstoffe in den Abgasen. Die erste Temperaturbehandlung bei einer Temperatur T₁ von 950 °C führt somit nicht zu einer Verbesserung der katalytischen Aktivität des Katalysators gegenüber einer Temperaturbehandlung in einem Temperaturbereich T₁ von 400 °C bis 700 °C. Eine solch hohe Temperatur T₁ führt somit lediglich zu einer Kostensteigerung, da diese Temperatur sowohl für das erste Tempern bei der Temperatur T₁ als auch für das zweite Tempern bei der Temperatur T₂ erreicht werden muss.

Das Tempern der ersten Schicht (A) sowohl bei der Temperatur T₁ als auch bei der Temperatur T₂ kann in einem Ofen, beispielsweise in einem Kammerofen oder einem Bandkalzinierer beispielsweise im Luftstrom erfolgen. Das Tempern kann jedoch auch mit Formiergas oder Inertgas durchgeführt werden. Gleiches gilt auch für das Tempern der zweiten Schicht (B) bei der Temperatur T₂ sowie das Tempern bei der Temperatur T₃.

Es ist möglich, dass der mit der ersten Zusammensetzung versehene Träger nach dem Tempern bei der Temperatur T₁ in Schritt c) zunächst wieder auf Raumtemperatur abkühlt und erst danach bei der Temperatur T₂ in Schritt d) getempert wird. Es ist jedoch ebenfalls möglich, dass sich das Tempern bei der Temperatur T₂ in Schritt d) unmittelbar an das Tempern bei der Temperatur T₁ in Schritt c) des erfindungsgemäßen Verfahrens anschließt.

Das Aufbringen der ersten und der zweiten Zusammensetzung in den Schritten b) und e) des erfindungsgemäßen Verfahrens erfolgt jeweils bei Raumtemperatur. Unter erster Zusammensetzung und zweiter Zusammensetzung ist die erste katalytisch wirksame Zusammensetzung beziehungsweise die zweite katalytisch wirksame Zusammensetzung zu verstehen.

Das Tempern bei den Temperaturen T₁, T₂ und/oder T₃ kann auch bei erhöhter Luftfeuchtigkeit durchgeführt werden. So kann in dem Ofen beispielsweise eine Luftfeuchtigkeit von 3% Wasser vorliegen. 3% Wasser bedeuten, dass 3Vol.-% Wasserdampf (gasförmiges Wasser) im Ofen vorherrschen. Beispielsweise kann das Tempern in einem Gasstrom stattfinden, der aus 97 Vol.-% Stickstoff und 3 Vol-% Wasserdampf besteht.

Das Tempern bei den Temperaturen T₁, T₂ und T₃ erfolgt vorzugsweise über eine Dauer von 10 bis 300 Minuten, besonders bevorzugt von 30 bis 240 Minuten. In diesem Zeitraum wird die jeweilige Schicht vollständig erwärmt. Bei einer kürzeren Temperierung kann dies nicht sichergestellt werden. Eine länger dauernde Erwärmung führt zu keiner weiteren Auswirkung auf die katalytische Aktivität des Katalysators, so dass hier nur zusätzliche Kosten entstehen würden.

Nach dem zweimaligen Tempern der ersten Schicht (A) bei einer ersten Temperatur T₁ und einer zweiten Temperatur T₂ wird eine zweite katalytisch wirksame Zusammensetzung, welche Platin und/oder Rhodium aufweist, auf die getemperte erste Schicht (A) aufgebracht. Hierdurch erhält man eine zweite Schicht (B). Diese wird bei einer dritten Temperatur T₃ getempert. Die Temperatur T₃ liegt in einem Bereich von 400°C bis 700°C, vorzugsweise in einem Bereich von 500°C bis 650°C. Diese Temperaturen ermöglichen eine ausreichende Festigkeit der zweiten Schicht (B) sowohl auf der ersten Schicht (A), soweit diese von der zweiten Schicht (B) bedeckt wird. Darüber hinaus wird auch eine gute Haftung mit dem Träger ermöglicht. Während des Temperns erfolgt zudem eine Ausbildung von Edelmetallteilchen, welche dann als aktive Zentren an der Oberfläche des Katalysators wirksam sind.

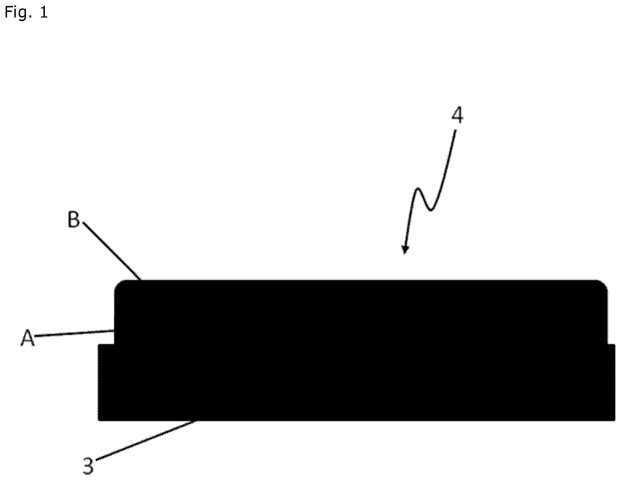

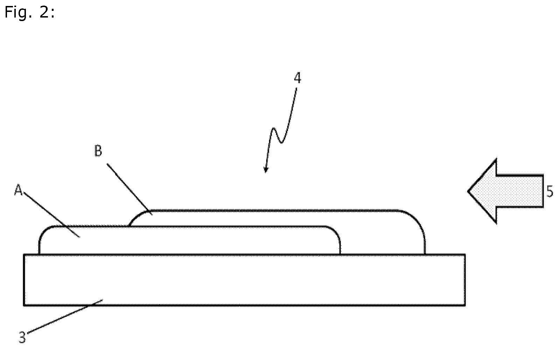

Die zweite Schicht (B) kann vollständig oder teilweise auf die getemperte erste Schicht (A) aufgebracht werden. Bei einem vollständigen Aufbringen bedeckt die zweite Schicht (B) die erste Schicht (A). Ein Kontakt zwischen der zweiten Schicht (B) und dem Träger besteht dann nicht. Fig. 1 zeigt schematisch eine solche Ausführungsform. Bei einem teilweisen Aufbringen besteht ein Kontakt zwischen der zweiten Schicht (B) und der ersten Schicht (A) sowie zwischen der zweiten Schicht (B) und dem Träger. In diesem Fall bedeckt die zweite Schicht (B) die Oberfläche der ersten Schicht (A) nicht vollständig, wie in Fig. 2 schematisch dargestellt. Vorzugsweise bedeckt die zweite Schicht (B) die Oberfläche der ersten Schicht (A) zu wenigstens 50%, vorzugsweise zu wenigstens 60 %, weiter vorzugsweise zu wenigstens 75 %, insbesondere zu wenigstens 85 %, speziell zu wenigstens 90 % oder 95 %, ganz besonders bevorzugt in einem Bereich von 60% bis 95%, bevorzugt von 70% bis 90%, insbesondere von 72% bis 88%. Dabei hat sich gezeigt, dass ein Verhältnis der Länge der ersten Schicht (A) entlang der Strömungsrichtung zur Länge der zweiten Schicht (B) entlang der Strömungsrichtung in einem Bereich von 1:2 bis 2:1, vorzugsweise von 1:1,5 bis 1,5:1, insbesondere von 1:1,2 bis 1,2:1, besonders bevorzugt ist.

Eine teilweise Bedeckung der ersten Schicht (A) durch die zweite Schicht (B) ist dabei gegenüber einer vollständigen Bedeckung bevorzugt. Bei einer vollständigen Bedeckung ist die Umsatzrate des Katalysators geringer. Ebenso zeigt sich ein negativer Effekt, wenn die erste Schicht (A) in Strömungsrichtung nach der zweiten Schicht (B) angeordnet ist, es also keine Überlappung der beiden Schichten gibt. Bei einer solchen Zonenbeschichtung, bei der kaum oder keine Überlappung der beiden Schichten auftritt, ist die CO-Emission deutlich höher als bei einer Lagenbeschichtung, in der erste Schicht (A) und zweite Schicht (B) überlappen. Der Umsatz des aus dem Verbrennungsmotor strömenden Abgases wird also schlechter, wie aus der nachfolgenden Tabelle 5 ersichtlich.

**Tabelle 5:**

| **Art der Beschichtung** | **CO [g/km]** | **NOₓ [g/km]** |
|---|---|---|
| Zonenbeschichtung | 0,507 | 0,094 |
| Lagenbeschichtung | 0,368 | 0,107 |
| | | |
| Zonenbeschichtung, gealtert | 0,912 | 0,127 |
| Lagenbeschichtung, gealtert | 0,625 | 0,127 |

Angegeben sind die Emissionswerte, also die Menge an CO und NO_{X}, die nach dem Durchgang durch den Katalysator nach dem offiziellen Messzyklus gemessen werden. Eine Verschlechterung der Emission insgesamt ergibt sich sowohl bei einer Zonenbeschichtung als auch bei einer Lagenbeschichtung, wenn die Schichten gealtert, also einer Temperaturbehandlung ausgesetzt werden. Jedoch auch nach der Alterung werden die Emissionsgrenzwerte von 2,0g/km für CO und 0,15g/km für NO_{X} eingehalten.

Bei der erfindungsgemäßen Herstellung eines Mehrschichtkatalysators ist es möglich, dass man die erste Schicht (A) und/oder die zweite Schicht (B) vor dem Tempern erwärmt. Das Erwärmen erfolgt dabei bei einer Temperatur von 200°C, insbesondere bei einer Temperatur im Bereich von 80°C bis 170°C, besonders bevorzugt im Bereich von 100°C bis 150°C. Durch das Erwärmen werden die erste Schicht (A) und/oder die zweite Schicht (B) getrocknet. Durch die Trocknung erfolgt eine Verringerung der flüchtigen Bestandteile der Zusammensetzung und somit eine erste Anhaftung der Zusammensetzung am Träger, so dass die weitere Bearbeitung erleichtert wird. Um in der Zusammensetzung enthaltenes Lösungsmittel möglichst vollständig zu entfernen, erfolgt die Trocknung vorzugsweise in einem Gasstrom, insbesondere in einem Luftstrom. Erfolgt das Tempern ohne dass die jeweiligen Zusammensetzungen (erste und zweite katalytisch wirksame Zusammensetzung) zuvor getrocknet wurden, kann es zu Haftungsproblemen der Zusammensetzungen auf dem Träger kommen. In diesem Fall kommt es zur Ausbildung eines Feuchtegradienten innerhalb der auf dem Träger aufgebrachten Zusammensetzung. Je nach Ausprägung dieses Feuchtegradienten kann es zur Ausbildung von Rissen in der aufgebrachten Zusammensetzung also der ersten Schicht (A) und/oder der zweiten Schicht (B) kommen, wodurch diese nicht mehr am Träger haften kann/können, wodurch die Lebensdauer eines erfindungsgemäß hergestellten Katalysators verkürzt wird.

Die Beladung der ersten (A) und/oder zweiten Schicht (B) mit der jeweiligen katalytisch wirksamen Zusammensetzung liegt bevorzugt im Bereich von 40 g/L bis 150 g/L, insbesondere bevorzugt 75 g/L. Die Beladung gibt die Menge der aufgetragenen Zusammensetzung bezogen auf das Leervolumen in Litern des Katalysators (des Trägers) an.

Das Sauerstoffspeichermaterial der ersten Schicht (A) und/oder das Sauerstoffspeichermaterial der zweiten Schicht (B) kann/können bevorzugt ein oder mehrere Metalle ausgewählt aus der Gruppe bestehend aus Neodym, Praseodym, Lanthan und Hafnium aufweisen. Die Metalle liegen bevorzugt in Form ihrer Oxide vor. Dabei kann der Anteil der jeweiligen Metalloxide 2 Gew.-% bis 10 Gew.-%, bevorzugt 3 Gew.-% bis 7 Gew.-% bezogen auf 100 Gew.-% des Sauerstoffspeichermaterials betragen.

Die Dotierung des Sauerstoffspeichermaterials in dem genannten Beriech führt zu einer verbesserten thermischen Stabilität des Sauerstoffspeichermaterials. Liegt der Anteil unter 2 Gew.-%, so ist der Effekt kaum sichtbar. Bei höheren Anteilen von über 10 Gew.-% wird die Stabilität nicht weiter erhöht. Weiterhin wird durch die Zugabe von Praseodym, Lanthan, Neodym und/oder Hafnium, insbesondere in Form ihrer Oxide, der Ein- und Ausbau von Sauerstoff in das Sauerstoffspeichermaterial beschleunigt.

Das erste Sauerstoffspeichermaterial und/oder das zweite Sauerstoffspeichermaterial können Lanthanoxid in einer Menge von 0,1 bis 8 Gew.-%, vorzugsweise von 2 bis 6 Gew.-% aufweisen, bezogen auf das Gesamtgewicht des jeweiligen Sauerstoffspeichermaterials von 100 Gew.-%. Weiterhin ist es möglich, dass das erste Sauerstoffspeichermaterial und/oder das zweite Sauerstoffspeichermaterial Praseodymoxid in einer Menge von 0,1 Gew.-% bis 10 Gew.-%, vorzugsweise von 0,01 Gew.-% bis 7 Gew.-% aufweist, bezogen auf 100 Gew.-% des jeweiligen Sauerstoffspeichermaterials.

Durch die Dotierung lässt sich auch die BET-Oberfläche der Sauerstoffspeichermaterialien einstellen. Bei der Herstellung eines Mehrschichtkatalysators und/oder im Betrieb ist ein Katalysator hohen Temperaturbelastungen ausgesetzt. Um die Stabilität der Porenstruktur der Sauerstoffspeichermaterialien zu bestimmen, werden diese für eine Dauer von etwa 3 bis 8 Stunden einer Temperatur von 1000°C ausgesetzt. Nach dieser Temperaturbehandlung wird die BET-Oberfläche bestimmt. Sauerstoffspeichermaterialien, welche aus Cer-Oxid und Zirkonium-Oxid bestehen weisen nach einer Temperaturbehandlung von 1000°C eine BET Oberfläche von 20 m²/g oder weniger auf.

In der nachfolgenden Tabelle 6 ist die jeweilige BET-Oberfläche unterschiedlicher Sauerstoffspeichermaterialien nach Temperaturbehandlung bei 1000°C gezeigt. Die Sauerstoffspeichermaterialien Nr. 1 und Nr. 5 bestehen aus CeO₂ und ZrO₂. Diese weisen eine BET-Oberfläche von weniger als 20 m²/g auf. Durch die Dotierung mit Oxiden von Praseodym, Lanthan, Neodym und/oder Hafnium wird die BET-Oberfläche nach Temperaturbehandlung vergrößert. Die thermische Stabilität der Sauerstoffspeichermaterialien wird durch die Dotierung demnach erhöht.

**Tabelle 6:**

| Sauerstoffspeichermaterial | CeO₂ [Gew.%] | ZrO₂ [Gew.%] | Nd₂O₃ [Gew.%] | La₂O₃ [Gew.%] | Y₂O₃ [Gew.%] | Pr₆O₁₁ [Gew.%] | BET [m²/g] |
|---|---|---|---|---|---|---|---|
| Nr. 1 | 70 | 30 | | | | | 17 |
| Nr. 2 | 56 | 39 | 5 | | | | 28 |
| Nr. 3 | 65 | 27 | | 8 | | | 30 |
| Nr. 4 | 60 | 25 | 5 | 2 | 8 | | 33 |
| Nr. 5 | 58 | 42 | | | | | 16 |
| Nr. 6 | 60 | 30 | | 3 | | 7 | 49 |
| Nr. 7 | 68 | 24 | | 5 | | 3 | 17 |

Die Dotierung des Sauerstoffspeichermaterials der zweiten Schicht (B) mit Oxiden von Praseodym, Lanthan, Neodym und/oder Hafnium führt zu einer Verringerung der Sauerstoffspeicherkapazität. Eine katalytisch wirksame Schicht, welche ein Sauerstoffspeichermaterial, welches aus 75 Gew.-% CeO₂ und 25 Gew.-% ZrO₂ besteht, und Palladium umfasst, weist eine Sauerstoffspeicherkapazität von etwa 800 µmol CO/g auf. Im Gegensatz hierzu weist ein Sauerstoffspeichermaterial, welches ausschließlich aus Cer-Oxid besteht eine Sauerstoffspeicherkapazität von etwa 730 µmol CO/g auf

Ersetzt man nun das Sauerstoffspeichermaterial durch ein dotiertes Cer-Zirkonium-Oxid, sinkt die Sauerstoffspeicherkapazität. Eine Dotierung des Sauerstoffspeichermaterials mit 4 Gew.-% Lanthanoxid führt zu einer Sauerstoffspeicherkapazität von 710 µmol CO/g, eine Dotierung mit 12 Gew.-% Lanthanoxid zu einer Kapazität von etwa 600 µmol CO/g.

Die Sauerstoffspeicherkapazität kann beispielsweise mittels CO-Chemisorption bestimmt werden. Hierzu wird die zu analysierende Probe zunächst bei einer bestimmten Temeperatur (350°C) mit Sauerstoff vollständig oxidiert. Anschließend wird die Probe mit CO "bepulst" bis kein Sauerstoff mehr in der Probe zur Oxidation des CO vorhanden ist. Bepulsen bedeutet, dass CO pulsweise dosiert wird. Das durch die zu analysierende Probe strömende Gas wird detektiert. Durch Analyse der Fläche unter den durch die Detektion erhaltenen Peaks kann dann die Menge des umgesetzten CO bestimmt werden, welches ein Maß für die Sauerstoffspeicherkapazität darstellt. Die Sauerstoffspeicherkapazität wird daher in µmol CO pro Gramm katalytisch wirksamer Zusammensetzung angegeben.

Mit der Menge an Neodym, Praseodym, Lanthan und Hafnium, welche dem Sauerstoffspeichermaterial der ersten Schicht (A) und/oder der zweiten Schicht (B) zugegeben wird, lassen sich somit die Eigenschaften der katalytisch aktiven Schicht einstellen. Durch diese Materialien können die thermische Stabilität, die Sauerstoffspeicherkapazität und die Geschwindigkeit des Sauerstoffein- und -ausbaus beeinflusst und nach Bedarf eingestellt werden.

Die Zusammensetzung der ersten Schicht (A) und/oder die Zusammensetzung der zweiten Schicht (B) weist/weisen vorzugsweise eine Teilchengröße d90 im Bereich von 10 µm bis 35 µm, bevorzugt im Bereich von 15 µm bis 30 µm, besonders bevorzugt im Bereich von 19 µm bis 24 µm auf. Mit d90 wird die Partikelgröße bezeichnet, für die 90% der Partikel kleiner als der Wert d90 sind.

Überraschenderweise hat sich nun gezeigt, dass bei einer Teilchengröße d90 im Bereich von 10 µm bis 35 µm, bevorzugt im Bereich von 15 µm bis 30 µm, besonders bevorzugt im Bereich von 19 µm bis 24 µm der Zusammensetzung die Abgase aus Verbrennungsmotoren Motorbedingungen besonders gut abgebaut werden. Insbesondere bei mageren Bedingungen kann der Ausstoß an Kohlenwasserstoffen, Kohlenstoffmonoxid und Stickoxiden deutlich gegenüber Zusammensetzungen, welche Teilchengrößen von weniger als 10 µm aufweisen, verringert werden. Bei fettem Motorbetrieb sinkt insbesondere der Ausstoß an Kohlenstoffmonoxid deutlich ab. Gleichzeitig kann auch der Ausstoß an Kohlenstoffdioxid gering gehalten werden.

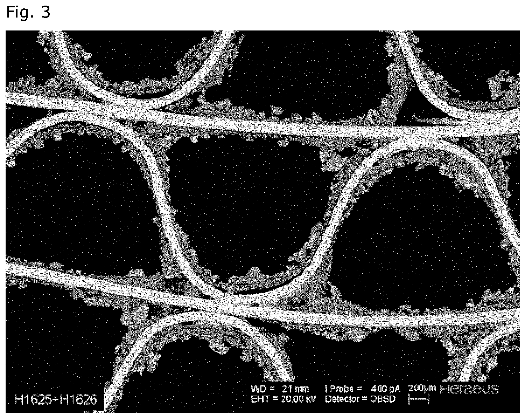

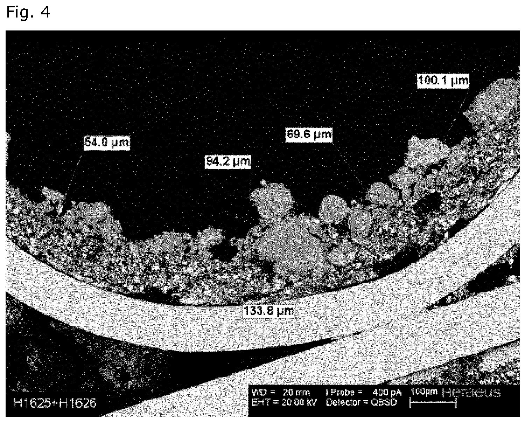

Beträgt die Teilchengröße d90 mehr als 35 µm, so ist eine Verwendung in einem Katalysator nicht mehr vorteilhaft. Bei der Beschichtung eines Katalysatorträgers mit einer Zusammensetzung mit einer entsprechend großen Teilchengröße liegen die Teilchen nicht mehr verzahnt miteinander vor. Vielmehr kommt es zu einer Ausbildung von Agglomeraten. Fig. 3 zeigt eine Rasterlektronenmikroskopische (REM)-Aufnahme, bei der die zweite Schicht Teilchengrößen d90 von mehr als 35 µm aufweist. In Fig. 4 ist die Teilchengröße der einzelnen Partikel in der zweiten Schicht erkennbar. Fig. 4 stellt einen Ausschnitt aus Fig. 3 dar.
Darüber hinaus kann die Teilchengröße der Zusammensetzung auch über die d50 und die d10 Partikelgröße definiert werden. Hier sind entsprechend 50% bzw. 10% der Partikel kleiner als der entsprechende Wert. Bevorzugt weisen die Zusammensetzung der ersten Schicht (A) und/oder die Zusammensetzung der zweiten Schicht (B)eine Teilchengröße d50 im Bereich von 2,5 µm bis 11,5 µm, bevorzugt im von 4 µm bis 10 µm, besonders bevorzugt von 5,5 µm bis 8,5 µm auf. Weiter bevorzugt weist sie eine Teilchengröße d10 im Bereich von 1 µm bis 4µm, bevorzugt von 1 µm bis 2 µm, besonders bevorzugt von 1,0 µm bis 1,8 µm auf.

Die Bestimmung der Partikelgrößenverteilung erfolgte nach ISO 13320 mit dem Lasergranulometer CILAS 920 der Firma Quantachrome, Odelzhausen, Deutschland. Bei der Messung wurde eine niedrigenergetische Laserdiode mit einer Leistung von 3 mW und einer Wellenlänge von 830 nm verwendet. Die Begriffe "Teilchengröße", "Teilchengrößenverteilung", " Partikelgröße" und "Partikelgrößenverteilung" werden in der vorliegenden Anmeldung synonym verwendet und bezeichnen jeweils die nach ISO 13320 per Lasergranulometer bestimmte Partikelgrößenverteilung.

Die katalytisch wirksame Zusammensetzung der ersten Schicht (A) und/oder die katalytisch wirksame Zusammensetzung der zweiten Schicht (B) kann weiterhin gamma-Aluminiumoxid (γ-Al₂O₃) insbesondere mit Lanthanoxid La₂O₃ dotiertes γ-Al₂O₃ aufweisen. Der Gehalt von La₂O₃ bezogen auf die Menge an Al₂O₃ liegt bevorzugt im Bereich von 2 Gew.-% bis 4 Gew.-%, besonders bevorzugt bei 3 Gew.-%

γ-Al₂O₃ beeinflusst die Haftung der Zusammensetzung auf der Oberfläche an der Innenseite des Trägers. Die erste Schicht (A) ist vollständig auf dem Trägermaterial des erfindungsgemäß hergestellten Mehrschichtkatalysators (4) aufgetragen, wohingegen die zweite Schicht (B) teilweise auf der ersten Schicht (A) und teilweise auf dem Trägermaterial aufgetragen ist. Daher weist die Zusammensetzung der ersten Schicht (A) bevorzugt einen höheren Anteil an γ-Al₂O₃ auf als die Zusammensetzung der zweiten Schicht (B). Übersteigt der Anteil an γ-Al₂O₃ in der Zusammensetzung der zweiten Schicht (B) 30 Gew.-%, wird der NOₓ-Umsatz der Schicht schlechter. Mit steigendem Anteil an Sauerstoffspeichermaterial an der zweiten Schicht verbessert sich somit der NOₓ-Umsatz des erfindungsgemäß hergestellten Mehrschichtkatalysators (4). Halbiert man in einem erfindungsgemäß hergestellten Katalysator die Menge an eingesetztem Sauerstoffspeichermaterial und ersetzt diese durch γ-Al₂O₃, so steigt die NOₓ-Emission um etwa 25 bis 30 % an. Verwendet man Sauerstoffspeichermaterialien mit γ-Al₂O₃-Anteilen von 30 Gew.-% oder weniger, werden Stickoxide (NOx) in einer Menge von etwa 0,0099 g/km (Gramm NO_{X} pro Kilometer Fahrtstrecke) ausgestoßen. Halbiert man nun die Menge an Sauerstoffspeichermaterialien, so erhöht sich der Wert auf 0,125 g/km.

γ-Al₂O besitzt bevorzugt eine Teilchengröße d90 im Bereich von 10 µm bis 35µm, bevorzugt im Bereich von 15 µm bis 30 µm, besonders bevorzugt im Bereich von 19 µm bis 24 µm. Überraschenderweise hat sich gezeigt, dass die Abgasbehandlung mit einer Zusammensetzung mit Teilchengrößen in diesem Bereich gegenüber Zusammensetzungen mit kleineren Teilchengrößen verbessert werden konnte. Kleinere Teilchengrößen werden üblicherweise durch einen Mahlschritt erreicht. Ein solcher ist hier nicht erforderlich.

Bei γ-Aluminiumoxid ist eine große BET-Oberfläche bevorzugt. Die BET-Oberfläche von γ-Al₂O₃ liegt üblicherweise bei etwa 200 m²/g. Bei hohen Temperaturen, wie sie beispielsweise beim Tempern während des erfindungsgemäßen Herstellungsverfahrens oder auch im Betrieb eines Katalysators auftreten, sinkt dieser Wert auf etwa 40 m²/g bis 50 m²/g. Durch die Dotierung mit Lanthanoxid wird eine höhere thermische Stabilität von γ-Al₂O₃ erreicht. Die BET-Oberfläche von dotiertem γ-Al₂O₃ liegt auch nach thermischer Behandlung noch in einem Bereich von über 70 m²/g, besonders bevorzugt bei 90 m²/g.

Die BET-Oberfläche wird auch spezifische Oberfläche genannt und kann nach der im Stand der Technik bekannten BET-Methode bestimmt werden. Für die Messung wird ein Gas, häufig Stickstoff, über das zu untersuchende Material geleitet. Mit Hilfe der BET-Gleichung wird aus einer adsorbierten Gasmenge die Menge an Adsorbat berechnet, die auf der Oberfläche des zu untersuchenden Gegenstandes eine Schicht, die sogenannte Monoschicht, ausbildet. Die Anzahl der Mol in der Monoschicht Vm multipliziert mit der Avogadrozahl N_{A} und dem Platzbedarf eines Gasmoleküls (für Stickstoff 0,162 Nanometer²) ergibt die BET-Oberfläche.

Vorzugsweise beträgt die Menge an Aluminiumoxid in der ersten Schicht (A) 5 Gew.-% bis 40 Gew.-%, vorzugsweise 10 Gew.-% bis 30 Gew.-%, bezogen auf das Gesamtgewicht der ersten Schicht (A) von 100 Gew.-%. Eine größere Menge an Aluminiumoxid würde zu einer verringerten Sauerstoffspeicherkapazität der ersten Schicht (A) führen, was wiederum zu einer geringeren Aktivität des Katalysators führen würde.

Die Menge an Aluminiumoxid in der zweiten Schicht (B) beträgt vorzugsweise 1 Gew.-% bis 40 Gew.-%, insbesondere bevorzugt 5 Gew.-% bis 30 Gew.-%, bezogen auf das Gesamtgewicht der zweiten Schicht (B) von 100 Gew.-%. Ein Mindestanteil an Aluminiumoxid ist sowohl in der ersten Schicht (A) als auch in der zweiten Schicht (B) notwendig, um eine gute Haftung mit dem Trägermaterial zu ermöglichen. Zu große Mengen an Aluminiumoxid führen jedoch zu einer Verringerung der katalytischen Aktivität.

Bevorzugt umfasst die katalytisch wirksame Zusammensetzung das Sauerstoffspeichermaterial, wenigstens ein Edelmetall und Aluminiumoxid. Das Bereitstellen der Zusammensetzung umfasst in dieser Ausführungsform die folgenden Schritte:
i. Einbringen des Sauerstoffspeichermaterials in Wasser,
ii. Zugabe von Edelmetall oder Edelmetallen in Form eines ihrer Salze in Lösung und
iii. Einbringen von Aluminiumoxid in die in Schritt (ii) erhaltene Aufschlämmung.

Dabei wird in Schritt (ii) währen der Zugabe der Lösung der pH-Wert bevorzugt in einem Bereich von 4 bis 5 gehalten. Dies erfolgt mit üblichen, im Stand der Technik bekannten basischen Lösungsmitteln. Bevorzugt erfolgt die Einstellung des pH-Wertes mit Ammoniak NH₃. Dies ermöglicht ein effektives Aufziehen des Edelmetalls/der Edelmetalle auf das Sauerstoffspeichermaterial. Überraschenderweise hat sich gezeigt, dass die Light-off-Temperatur des erfindungsgemäß hergestellten Mehrschichtkatalysators (4) bei Verwendung von Ammoniak zur Einstellung des pH-Wertes bei allen Emissionswerten (Kohlenstoffmonoxid CO, Kohlenwasserstoffe HC und Stickoxide NOₓ) besser ist, als bei der Verwendung anderer Basen, wie aus der nachfolgenden Tabelle 7 hervorgeht.

**Tabelle 7:**

| **Base** | **Light-off-Temperatur [°C]** | | |
|---|---|---|---|
| | **CO** | **HC** | **NOₓ** |
| NH₃ | 175 | 179 | 180 |
| Ethanolamin | 205 | 208 | 209 |
| Tetraethylammoniumhydroxid (TEAOH) | 194 | 197 | 195 |
| Ethanolamin + Zitronensäure | 184 | 186 | 185 |

Ein entsprechender nach dem erfindungsgemäßen Verfahren erhaltener Mehrschichtkatalysator (4) für die Abgasnachbehandlung von Verbrennungsabgasen umfasst einen Träger (3), der Kanäle zur Durchführung von Gasen aufweist, wobei zumindest ein Teil der Kanäle einen in Strömungsrichtung der Abgase stromaufwärts befindlichen Abgaseinlass und einen stromabwärts befindlichen Gasauslass aufweist, und wobei zumindest ein Teil der Kanäle eine wenigstens auf der Innenseite aufgebrachte erste Schicht (A), und eine wenigstens teilweise die erste Schicht bedeckende zweite Schicht (B) aufweist, wobei die erste Schicht (A) und die zweite Schicht (B) eine katalytisch wirksame Zusammensetzung umfassen.

Fig. 1 zeigt schematisch den Aufbau eines Mehrschichtkatalysators (4) mit dem Träger (3), der ersten Schicht (A) und der zweiten Schicht (B). Fig. 2 zeigt eine bevorzugte Ausführungsform. Hier stellt der Pfeil (5) die Strömungsrichtung des zu behandelnden Abgases dar.

Wird im Folgenden die erste Schicht (A) beschrieben, so ist hierunter die erste katalytisch wirksame Schicht zu verstehen. Gleiches gilt für die zweite Schicht (B), welche die zweite katalytisch wirksame Schicht (B) bezeichnet. Mit "Zusammensetzung der ersten Schicht (A)" wird die katalytisch wirksame Zusammensetzung, welche als erste Schicht (A) auf die Trägerstruktur aufgebracht wird, bezeichnet. Mit "Zusammensetzung der zweiten Schicht (B)" wird die katalytisch wirksame Zusammensetzung, welche als zweite Schicht (B) auf die Trägerstruktur aufgebracht wird, bezeichnet.

Es hat sich nun gezeigt, dass die Gesamtschichtdicke aus erster Schicht (A) und zweiter Schicht (B) bevorzugt 100 µm oder weniger, besonders bevorzugt 50 µm oder weniger beträgt. Bei einer solchen Gesamtschichtdicke kann das Abgas ungehindert durch den Katalysator strömen. Dabei kommt das Abgas immer noch ausreichend in Kontakt mit den katalytisch aktiven Zusammensetzungen der einzelnen Schichten. Die Gesamtschichtdicke ist die durchschnittliche Schichtdicke an der Wand der Trägerstruktur (3). Dabei werden nur die ebenen Flächen einer Wand bei der Bestimmung der Schichtdicke berücksichtigt. Bereiche, an denen zwei oder mehr Wände aufeinanderstoßen oder sich berühren, wodurch es zur Ausbildung von Hohlräumen mit einer Dreieck-ähnlichen Form kommt, finden bei der Bestimmung der Gesamtschichtdicke keine Berücksichtigung.

Bevorzugt umfasst ein erfindungsgemäß hergestellter Mehrschichtkatalysator somit wenigstens eine erste katalytisch wirksame Zusammensetzung in einer ersten Schicht (A), welche ein Sauerstoffspeichermaterial, mit La₂O₃ dotiertes γ-Al₂O₃ und Palladium umfasst, und eine zweite katalytisch wirksame Zusammensetzung in einer zweiten Schicht (B), welche ein Sauerstoffspeichermaterial, mit La₂O₃ dotiertes γ-Al₂O₃ und Platin und/oder Rhodium umfasst, auf.

Aus dem Stand der Technik ist bekannt, dass Rhodium, welches sich auf γ-Al₂O₃ befindet, für die eigentliche Katalyse-Reaktion nicht oder nur eingeschränkt zur Verfügung steht. Daher befinden sich bevorzugt Platin und/oder Rhodium in der Zusammensetzung der zweiten Schicht (B) zumindest fast ausschließlich auf dem Sauerstoffspeichermaterial. "Fast ausschließlich" bedeutet, dass das oder die Edelmetalle zu wenigstens 90%, bevorzugt zu wenigstens 95%, insbesondere zu wenigstens 98%, speziell zu 99% auf dem Sauerstoffspeichermaterial aufgebracht ist.

Überraschenderweise hat sich nun gezeigt, dass eine Balance zwischen geringer Light-Off-Temperatur und gleichzeitig großem Lambdafenster erreicht werden kann, wenn das Palladium in der Zusammensetzung der ersten Schicht (A) sich nicht fast ausschließlich auf dem Sauerstoffspeichermaterial befindet. In einer bevorzugten Ausführungsform befindet sich ein Anteil von 30 Gew.-% bis 40 Gew.-%, insbesondere 30 Gew.-% des Palladiums auf dem γ-Al₂O₃, während sich 60 Gew.-% bis 70 Gew.-%, insbesondere 70 Gew.-% des Palladiums auf dem Sauerstoffspeichermaterial befinden. Ist das Palladium in der Zusammensetzung der ersten Schicht (A) fast ausschließlich auf dem Sauerstoffspeichermaterial aufgetragen, so wirkt sich dies nachteilig auf das Light-Off-Verhalten des erfindungsgemäß hergestellten Mehrschichtkatalysators (4) aus.

Bevorzugt ist die erste Schicht (A) im Wesentlichen frei von Platin und/oder Rhodium. Vorzugsweise ist die zweite Schicht (B) im Wesentlichen frei von Palladium. Im "Wesentlichen frei" im Sinne der vorliegenden Anmeldung bedeutet, dass das Gewichtsverhältnis von Palladium in der zweiten Schicht (B) zu Palladium in der ersten Schicht (A) bevorzugt kleiner als 1:10, vorzugsweise kleiner 1:50, insbesondere kleiner 1:100 oder kleiner 1:500, speziell 0, und dass das Gewichtsverhältnis von Platin und/oder Rhodium in der ersten Schicht (A) zu Platin und/oder Rhodium in der zweiten Schicht (B) ist bevorzugt kleiner als 1:10, vorzugsweise kleiner 1:50, insbesondere kleiner 1:100 oder kleiner 1:500, speziell 0 ist.

Der Mehrschichtkatalysator (4) umfasst eine Trägerstruktur, die Kanäle zur Durchführung von Gasen aufweist. Auf zumindest ein Teil der Kanäle wird auf die Innenseite eine katalytisch wirksame Zusammensetzung aufgebracht. Dabei kann der Träger (3) ein keramisches oder ein metallisches Material umfassen. Bevorzugt umfasst sie ein metallisches Material, insbesondere eine metallische Folie, die Eisen, Chrom und Aluminium umfasst.

Die metallische Folie umfasst bevorzugt einen Anteil von 4 Gew.-% bis 6 Gew.-% Aluminium und einen Anteil von 15 Gew.-% bis 20 Gew.-% Chrom. Liegt der Anteil an Aluminium über 6 Gew.-%, ist die Folie nicht flexibel genug, um in die gewünschte Form der Trägerstruktur gebracht zu werden. Liegt der Anteil an Aluminium bei unter 4% haftet die katalytisch wirksame Schicht nicht darauf. Dabei hat sich gezeigt, dass eine homogene Verteilung des Aluminiums in der Folie wichtig ist. Durch den Einfluss von Wärme und Sauerstoff bildet sich Aluminiumoxid, welches an die Oberfläche der Metallfolie wandert. Ist die Konzentration an Aluminiumoxid an der Oberfläche sehr hoch, bildet sich eine raue Oberflächenstruktur aus. Dies geschieht bei Folien mit einem Anteil an Aluminium von über 6 Gew.-% und kann beispielsweise im Rasterelektronenmikroskop verfolgt werden. Auf einer solch rauen Oberfläche haftet die katalytisch wirksame Schicht nicht oder nur schlecht. Die Wirksamkeit des Katalysators ist so nicht sicher gestellt.

Entsprechend raue Oberflächen können sich aber auch lokal ausbilden. Ist das Aluminium in der metallischen Folie nicht homogen verteilt, bilden sich an den Stellen, an denen die Konzentration an Aluminium lokal 6% übersteigt, raue Oberflächenbereiche aus, an denen die katalytisch wirksame Schicht ebenfalls nicht haften kann.

Die Dicke einer solchen metallischen Folie liegt bevorzugt im Bereich von 30 µm bis 200 µm, bevorzugt beträgt die Dicke 100 µm. Ist die Folie dünner als 30 µm, so weist sie keine ausreichende thermische und mechanische Stabilität auf. Liegt die Dicke der Folie bei über 200 µm, so ist diese zu starr, um in die gewünschte Form gebracht zu werden. Zudem steigt das Gewicht des Katalysators an.

Wenigstens ein Teil der Kanäle der Trägerstruktur (3) weisen die wenigstens teilweise auf der Innenseite aufgebrachte erste katalytisch wirksame Schicht (A) und wenigstens teilweise die erste Schicht (A) bedeckende zweite katalytisch wirksame Schicht (B) aufweist. Dabei kann die zweite Schicht (B) die Oberfläche der ersten Schicht (A) zu wenigstens 50%, vorzugsweise zu wenigstens 60%, weiter bevorzugt zu wenigstens 75%, insbesondere zu wenigstens 85%, speziell zu wenigstens 90% oder zu wenigstens 95% bedecken.

Der erfindungsgemäß hergestellte Mehrschichtkatalysator (4) kann neben der ersten Schicht (A) und der zweiten Schicht (B) weitere katalytisch aktive Schichten, welche im erfindungsgemäßen Verfahren verwendete Zusammensetzungen enthalten, umfassen. Bevorzugt weist er jedoch ausschließlich die erste Schicht (A) und die zweite Schicht (B) auf.

In einer bevorzugten Ausführungsform sind die erste Schicht (A) und die zweite Schicht (B) derart angeordnet, dass im Betrieb das Abgas zuerst mit der zweiten Schicht (B) in Kontakt tritt. Diese Ausführungsform ist in Fig. 2 dargestellt. Strömt das Abgas aus dem Verbrennungsmotor in den Katalysator, so trifft es in dieser Ausführungsform zunächst auf die zweite Schicht (B). An dieser können Stickoxide reduziert werden, indem Sauerstoff aus dem Reaktionsgleichgewicht entfernt wird. Diese Reaktion muss ausreichend schnell erfolgen, um einen hohen Umsatz zu erreichen, was durch Platin und/oder Rhodium in der zweiten Schicht (B) ermöglicht wird. Anschließend strömt das Abgas die erste Schicht (A) an, welche Palladium umfasst. Palladium in der ersten Schicht (A) sorgt für einen langsameren Ein- und Ausbau von Sauerstoff im Sauerstoffspeichermaterial gegenüber der zweiten Schicht (B). Durch das Palladium wird jedoch die Sauerstoffspeicherkapazität des Sauerstoffspeichers der ersten Schicht (A) erhöht. Im Sauerstoffspeicher der zweiten Schicht (B) eingelagerter Sauerstoff kann daher an den Sauerstoffspeicher der ersten Schicht (A) abgegeben werde. Eine Sättigung des Sauerstoffspeichers der zweiten Schicht (B), welche zu einer Verschlechterung der Reduktion der Stickoxide führen würde, wird somit vermieden.

Durch die Verwendung von Platin und/oder Rhodium in der zweiten Schicht (B) und den Einsatz von Palladium in der ersten Schicht (A) weist die zweite Schicht (B) unter Einsatzbedingungen eine höhere Aktivität hinsichtlich der Stickoxidreduktion als die erste Schicht (A) auf.

Der erfindungsgemäß hergestellte Mehrschichtkatalysator ist vorzugsweise ein 3-Wege-Katalysator. Dieser ist besonders bevorzugt für die Abgasnachbehandlung von 4-Takt Benzin Motoren, insbesondere für die Abgasnachbehandlung von Motorrädern mit 4-Takt Benzin Motoren mit einem Hubraum bis zu 2000 cm³. Bei diesen tritt im Betrieb eine große Lambdaschwankung in einem Bereich von 0,7 bis 1,3, insbesondere von 0,8 bis 1,2 auf. Der erfindungsgemäß hergestellte Mehrschichtkatalysator (4) kann auch bei diesen Lambdaschwankungen die Abgase fast vollständig umsetzen.

Ein erfindungsgemäß hergestellter Mehrschichtkatalysator (4) kann beispielsweise in Kleinmotoren, in Motorrädern, der Automobilindustrie, in Nutzfahrzeugen, für Industrie- und Spezialanwendungen und bei Marineapplikationen verwendet werden.

## Patentansprüche

1. Verfahren zur Herstellung eines Mehrschichtkatalysators zur Abgasnachbehandlung von Verbrennungsabgasen umfassend die folgenden Schritte:
a) Bereitstellen eines Trägers, dessen Oberfläche mit den zu reinigenden Gasen in Kontakt tritt,
b) Aufbringen einer ersten katalytisch wirksamen Zusammensetzung, welche Palladium in Form eines Salzes aufweist, auf die Oberfläche des Trägers, zur Herstellung einer ersten Schicht (A),
c) Tempern der ersten Schicht (A) bei einer ersten Temperatur T₁ in einem Bereich von 400 bis 700 °C, vorzugsweise von 500 bis 650 °C für eine Dauer t₁ von 5 Minuten oder mehr,
d) anschließendes Tempern der ersten Schicht (A) bei einer zweiten Temperatur T₂ in einem Bereich von 700 bis 1200 °C, vorzugsweise von 750 bis 950 °C, wobei T₂ um einen Betrag von 100 bis 400 °C größer ist als T₁,
e) Aufbringen einer zweiten katalytisch wirksamen Zusammensetzung, welche Platin und/oder Rhodium jeweils in Form eines Salzes aufweist, zur Herstellung einer zweiten Schicht (B), wobei die zweite Schicht (B) die getemperte erste Schicht (A) vollständig oder teilweise bedeckt, und
f) Tempern der zweiten Schicht (B) bei einer dritten Temperatur T₃ in einem Bereich von 400 bis 700 °C, vorzugsweise von 500 bis 650 °C.

2. Verfahren gemäß Anspruch 1, **dadurch gekennzeichnet, dass** das Tempern bei den Temperaturen T₁, T₂ und T₃ jeweils über eine Dauer von 10 bis 300 Minuten, besonders bevorzugt von 30 bis 240 Minuten, erfolgt.

3. Verfahren gemäß Anspruch 1 oder 2, **dadurch gekennzeichnet, dass** die erste Schicht (A) und/oder die zweite Schicht (B) vor dem Tempern bei einer Temperatur von 200 °C oder weniger erwärmt, insbesondere bei einer Temperatur im Bereich von 80 °C bis 170 °C, besonders bevorzugt im Bereich von 100 °C bis 150 °C, insbesondere erfolgt die Trocknung in einem Gasstrom, bevorzugt in einem Luftstrom.

4. Verfahren gemäß einem der Ansprüche 1 bis 3, **dadurch gekennzeichnet, dass** die erste katalytisch wirksame Zusammensetzung der ersten Schicht (A) ein erstes Sauerstoffspeichermaterial umfasst.

5. Verfahren gemäß Anspruch 4, **dadurch gekennzeichnet, dass** das erste Sauerstoffspeichermaterial der ersten katalytisch wirksamen Zusammensetzung die Zusammensetzung CeₓZr_{y}O_{z} mit z=2 aufweist, wobei bevorzugt x>0,5 und y<0,5 und x+y=1 ist.

6. Verfahren gemäß einem der Ansprüche 1 bis 5, **dadurch gekennzeichnet, dass** die erste Schicht (A) Palladium in einem Anteil von 0,05 Gew.-% bis 10 Gew.-%, vorzugsweise von 0,1 Gew.-% bis 10 Gew.-%, insbesondere vorzugsweise von 0,5 Gew.-% bis 5 Gew.-%, aufweist, bezogen auf 100 Gew.-% der Gesamtzusammensetzung der ersten Schicht (A).

7. Verfahren gemäß einem der Ansprüche 1 bis 6, **dadurch gekennzeichnet, dass** die erste Schicht (A) weiterhin Aluminiumoxid umfasst.

8. Verfahren gemäß einem der Ansprüche 1 bis 7, **dadurch gekennzeichnet, dass** die zweite katalytisch wirksame Zusammensetzung der zweiten Schicht (B) ein zweites Sauerstoffspeichermaterial umfasst.

9. Verfahren gemäß Anspruch 8, **dadurch gekennzeichnet, dass** das erste Sauerstoffspeichermaterial der ersten katalytisch wirksamen Zusammensetzung und das zweite Sauerstoffspeichermaterial der zweiten katalytisch wirksamen Zusammensetzung voneinander verschieden sind.

10. Verfahren gemäß einem der Ansprüche 1 bis 9, **dadurch gekennzeichnet, dass** das Massenverhältnis von Platin zu Rhodium in der zweiten Schicht (B) 9:1 bis 1:9, vorzugsweise 7:1 bis 1:5, besonders bevorzugt 5:1 bis 1:3, beträgt.

11. Verfahren gemäß einem der Ansprüche 1 bis 10, **dadurch gekennzeichnet, dass** die katalytisch wirksame Zusammensetzung der zweiten Schicht (B) Platin und/oder Rhodium in einem Anteil von 0,005 Gew.-% bis 2,00 Gew.-%, insbesondere bevorzugt 0,01 Gew.-% bis 1,0 Gew.-%, ganz besonders bevorzugt 0,02 Gew.-% bis 0,8 Gew.-%, bezogen auf 100 Gew.-% der Gesamtzusammensetzung der zweiten Schicht (B), aufweist.

## Claims

1. A method for producing a multilayer catalyst for exhaust gas after-treatment of combustion exhaust gases, comprising the followings steps:
a) providing a substrate, the surface of which comes into contact with the gases to be cleaned,
b) applying a first catalytically effective composition comprising palladium in the form of a salt, onto the surface of the substrate to produce a first layer (A),
c) annealing the first layer (A) at a first temperature T₁ in a range of 400 to 700°C, preferably of 500 to 650°C, for a period t₁ of 5 minutes or more,
d) subsequently annealing the first layer (A) at a second temperature T₂ in a range of 700 to 1200°C, preferably of 750 to 950°C, wherein T₂ is larger than T₁ by an amount of 100 to 400°C,
e) applying a second catalytically effective composition comprising platinum and/or rhodium, in each case in the form of a salt, to produce a second layer (B), wherein the second layer (B) fully or partially covers the annealed first layer (A), and
f) annealing the second layer (B) at a third temperature T₃ in a range of 400 to 700°C, preferably of 500 to 650°C.

2. The method according to claim 1, **characterized in that** the annealing takes place at the temperatures T₁, T₂ and T₃, in each case for a period of 10 to 300 minutes, particularly preferably of 30 to 240 minutes.

3. The method according to claim 1 or 2, **characterized in that** the first layer (A) and/or the second layer (B) heats prior to the annealing at a temperature of above 200° or less, in particular at a temperature in the range of 80° to 170°C, particularly preferably in the range of 100°C to 150°C, the drying in particular takes place in a gas flow, preferably in an airflow.

4. The method according to any one of claims 1 to 3, **characterized in that** the first catalytically effective composition of the first layer (A) comprises a first oxygen storage material.

5. The method according to claim 4, **characterized in that** the first oxygen storage material of the first catalytically effective composition has the composition CeₓZr_{y}O_{z} with z=2, wherein preferably x>0.5 and y<0.5 and x+y=1.

6. The method according to any one of claims 1 to 5, **characterized in that** the first layer (A) has palladium in an amount of 0.05% by weight to 10% by weight, preferably of 0.1% by weight to 10% by weight, in particular preferably of 0.5% by weight to 5% by weight, based on 100% by weight of the total composition of the first layer (A).

7. The method according to any one of claims 1 to 6, **characterized in that** the first layer (A) also comprises aluminium oxide.

8. The method according to any one of claims 1 to 7, **characterized in that** the second catalytically effective composition of the second layer (B) comprises a second oxygen storage material.

9. The method according to claim 8, **characterized in that** the first oxygen storage material of the first catalytically effective composition and the second oxygen storage material of the second catalytically effective composition differ from one another.

10. The method according to any one of claims 1 to 9, **characterized in that** the weight ratio of platinum to rhodium in the second layer (B) is from 9:1 to 1:9, preferably from 7:1 to 1:5, particularly preferably from 5:1 to 1:3.

11. The method according to any one of claims 1 to 10, **characterized in that** the catalytically effective composition of the second layer (B) has platinum and/or rhodium in an amount of 0.005% by weight to 2.00% by weight, in particular preferably of 0.01% by weight to 1.0% by weight, most preferably of 0.02% by weight to 0.8% by weight, based on 100% by weight of the total composition of the second layer (B).

## Revendications

1. Procédé pour la fabrication d'un catalyseur multicouche pour le post-traitement de gaz d'échappement de combustion, comprenant les étapes suivantes :
a) Mise à disposition d'un support, dont la surface entre en contact avec les gaz à épurer,
b) Application d'une première composition catalytique, comportant du palladium sous forme d'un sel, sur la surface du support pour la fabrication d'une première couche (A),
c) Thermostatisation de la première couche (A) à une première température T₁ sur une plage de 400 à 700 °C, de préférence de 500 à 650 °C pendant une durée t₁ de 5 minutes ou plus,
d) Thermostatisation subséquente de la première couche (A) à une deuxième température T₂ sur une plage de 700 à 1200 °C, de préférence de 750 à 950 °C, t₂ étant supérieure d'une valeur de 100 à 400 °C à T₁,
e) Application d'une deuxième composition catalytique qui comporte du platine et/ou du rhodium respectivement sous la forme d'un sel, pour la fabrication d'une deuxième couche (B), cette deuxième couche (B) recouvrant intégralement ou partiellement la première couche thermostatisée (A), et
f) Thermostatisation de la deuxième couche (B) à une troisième température T₃ sur une plage de 400 à 700 °C, de préférence de 500 à 650 °C.

2. Procédé selon la revendication 1, **caractérisé en ce, que** la thermostatisation aux températures T₁, T₂ et T₃ s'effectue respectivement sur une durée de 10 à 300 minutes, de manière particulièrement préférée de 30 à 240 minutes.

3. Procédé selon la revendication 1 ou 2, **caractérisé en ce, que** la première couche (A) et/ou la deuxième couche (B) sont chauffées avant la thermostatisation à une température de 200 °C ou inférieure, notamment à une température sur une plage de 80 °C à 170 °C, de manière particulièrement préférée sur une plage de 100 °C à 150 °C, le séchage s'effectuant notamment dans un flux de gaz, de préférence dans un flux d'air.

4. Procédé selon l'une des revendications 1 à 3, **caractérisé en ce, que** la première composition catalytique de la première couche (A) comporte un premier matériau de stockage d'oxygène.

5. Procédé selon la revendication 4, **caractérisé en ce, que** le premier matériau de stockage d'oxygène de la première composition catalytique présente la composition CeₓZr_{y}O_{z} avec z=2, avec de préférence x>0,5 et y<0,5 et x+y=1.

6. Procédé selon l'une des revendications 1 à 5, **caractérisé en ce, que** la première couche (A) comporte du palladium à un taux de 0,05 % poids à 10 % poids, de préférence de 0,1 % poids à 10 % poids, de manière particulièrement préférée de 0,5 % poids à 5 % poids, rapporté à 100 % poids de la composition globale de la première couche (A).

7. Procédé selon l'une des revendications 1 à 6, **caractérisé en ce, que** la première couche (A) comporte en outre de l'alumine.

8. Procédé selon l'une des revendications 1 à 7, **caractérisé en ce, que** la deuxième composition catalytique de la deuxième couche (B) comporte un deuxième matériau de stockage d'oxygène.

9. Procédé selon la revendication 8, **caractérisé en ce, que** le premier matériau de stockage d'oxygène de la première composition catalytique et le deuxième matériau de stockage d'oxygène de la deuxième composition catalytique sont différents entre eux.

10. Procédé selon l'une des revendications 1 à 9, **caractérisé en ce, que** le rapport de masse du platine par rapport au rhodium dans la deuxième couche (B) correspond à une valeur de 9:1 à 1:9, de préférence de 7:1 à 1:5, de manière particulièrement préférée de 5:1 à 1:3.

11. Procédé selon l'une des revendications 1 à 10, **caractérisé en ce, que** la composition catalytique de la deuxième couche (B) comporte du platine et/ou du rhodium à un taux de 0,005 % poids à 2,00 % poids, de manière particulièrement préférée de 0,01 % poids à 1,0 % poids, de manière très particulièrement préférée de 0,02 % poids à 0,8 % poids, rapporté à 100 % poids de la composition globale de la deuxième couche (B).
